# EUROPÄISCHE PATENTANMELDUNG

(11) **EP 2 478 807 A1**
(43) Veröffentlichungstag der Anmeldung: **25.07.2012**
(21) Anmeldenummer: 12150522.6
(22) Anmeldetag: 09.01.2012
(51) Int. Cl.: A47J 37/12

(54) **Tischkochgerät**

(30) Priorität: 17.01.2011 CH 722011
(71) Anmelder: Gerster, Peter, 4313 Möhlin (CH)
(72) Erfinder: Gerster, Peter, 4313 Möhlin (CH)
(74) Vertreter: Felber, Josef

(57) **Zusammenfassung**

Das Tisch-Kochgerät dient zum Garkochen von Fleisch- und Fischhäppchen sowie allerlei Gemüse und Teigwaren in einer Bouillon oder im Öl. Es besteht aus einem Kochbehälter (1) zum Aufsetzen auf einen Heizkörper oder Pastenbrenner, oder ausgerüstet mit einer Heizschlange als Tauchsieder, und zugehörigen Gabeln (4) zum Anstecken von Esshäppchen. Als Besonderheit schliesst es zugehörige individuelle wasserdurchlässige Gargut-Behälter (13) mit Handgriff (17) ein, die am Rand des Kochbehälters (1) unter Eintauchens des Gargut-Behälters (13) in die Bouillon oder das Öl im Kochbehälter (1) einhängbar sind. Durch Zusammendrücken des Handgriffs (17) ist dieser Gargut-Behälter (13) in mindestens zwei Teile aufspreizbar, sodass der Inhalt unten herausfallen kann. Der Kochbehälter (1) ist auch mit einem Separierer (2) aus senkrechten auf dem Kochbehälterboden stehenden Trennwänden ausgerüstet, sodass dreieckige Sektoren (3) zur Aufnahme der Spitze (5) je einer individuellen Gabel (4) gebildet werden. Schliesslich gehört zum Kochgerät ein Kochbehälterdeckel (11), der für jede individuell in den Kochbehälter (1) einzulegende Gabel (4) eine Aussparung (12) am Rand aufweist, sodass der Kochbehälterdeckel (11) auch bei eingelegten Gabeln (4) aufsetzbar ist.

## Beschreibung

Diese Erfindung betrifft ein Tisch-Kochgerät, das sich besonders dazu eignet, Chinoise-Gerichte und Fondue Bourguignonne am Tisch zu kochen, also Fleisch- und Fischhäppchen sowie allerlei Gemüse und Teigwaren in einer Bouillon oder in heissem Öl garzukochen.

Bisherige Tischkochgeräte hierzu bestehen aus einer Pfanne für die Bouillon oder das Öl sowie Gabeln, auf denen die Essensportionen aufgespiesst werden und hernach in die Bouillon oder das Öl getaucht werden. Dabei ergeben sich allerlei Probleme, die noch zuwenig befriedigend gelöst sind. Die Kochtöpfe werden mit Pastenbrennern oder elektrisch beheizt. Gerade im Falle der Pastenbrenner vermögen diese die Bouillon kaum nahe der Siedetemperatur zu halten, weil die Kopftöpfe oben offen sind und ein Deckel eingelegten Gabeln nicht aufsetzbar ist. Weiter ergeben sich bei mehreren Essenden die je ihre Gabel gleichzeitig in den Kochtopf einlegen, oftmals Missverständnisse, welche Gabel nun wem gehört. Ausserdem kreuzen sich die Gabeln mit ihren vorderen Bereichen im Kochtopf. Beim Herausziehen einer Gabel kann diese an einer anderen Gabel entlang streifen, sodass im schlimmsten Fall der Essenshappen von der Gabel abfällt und in der Bouillon oder im Öl verbleibt. Er muss durch Stochern und Aufstecken herausgefischt werden. Schliesslich ermöglichen es die bisherigen Kochgeräte für Fondue Chinoise und Fondue Bourguignonne bloss, Esswaren garzukochen, die auf eine Gabel aufsteckbar sind. Bei einigen Gemüsesorten, oder etwas bei Reis und einigen Teigwaren ist das allerdings nicht möglich und so werden diese zuvor in konventioneller Weise zubereitet bzw. gargekocht. Zieht sich ein Fondue-Essen über längere Zeit hin - was ja auch der Sinn und Zweck eines Fondues ist, so verkochen diese Gemüsespeisen und Beilagen, und auch im Falle von separat zu bereiteten Teigwaren bleiben diese nicht al dente, sondern verklumpen oder werden kalt.

Mit einem Fondue-Chinoise etwa können und sollen Speisen am Tisch direkt frisch zubereitet werden sodass gleich nach dem Garkochen verspeist werden können. Das sollte auch für Teigwaren, für Reis und alle Gemüse und andere Zutaten gelten, die in der Bouillon gargekocht werden können. Allerdings ist hierfür bisher kein geeignetes Tischkochgerät bekanntgeworden, welches dieses häppchenweise und individuelle Garkochen all dieser Speisen in einer Bouillon oder in Öl am Tisch wirklich überzeugend ermöglicht.

Die Aufgabe dieser Erfindung ist es deshalb, ein Tisch-Kochgerät anzugeben, das sich besonders dazu eignet, Chinoise-Gerichte oder Fondue Bourguignonne am Tisch individuell zu kochen, also Fleisch- und Fischhäppchen sowie allerlei Gemüse und Teigwaren in einer Bouillon oder in Öl garzukochen.

Diese Aufgabe wird gelöst von einem Tisch-Kochgerät zum Garkochen von Fleisch- und Fischhäppchen sowie allerlei Gemüse und Teigwaren in einer Bouillon oder in Öl, mit einem Kochbehälter zum Aufsetzen auf einen Heizkörper oder Pastenbrenner, oder ausgerüstet mit einer als Tauchsieder ausgeführten Heizschlange, und zugehörigen Gabeln zum Anstecken von Esshäppchen, und das sich dadurch auszeichnet, dass es individuelle wasserdurchlässige Gargut-Behälter mit Handgriff einschliesst, die am Kochtopfrand des Kochtopfes unter Eintauchens des Gargut-Behälters in die Bouillon oder ins Öl im Kochtopf einhängbar sind.

In einer besonderen Ausführung sind diese Gargut-Behälter durch Zusammendrücken des Handgriffs in mindestens zwei Teile aufspreizbar, sodass ihr Inhalt unten herausfallen kann. Der Kochbehälter ist vorteilhaft mit einem Separierer aus senkrechten auf dem Kochbehälterboden stehenden Trennwänden bestückt, welcher Sektoren zur Aufnahme der Spitze je einer individuellen Gabel bildet. Zum Kochbehälter gehört ein Kochtopfdeckel, der für jede individuell in den Kochbehälter einzulegende Gabel eine Aussparung am Rand aufweist, sodass der Kochbehälterdeckel auch bei eingelegten Gabeln aufsetzbar ist.

Anhand der Zeichnungen wir dieses Tischkochgerät näher vorgestellt und seine einzelnen Bestandteile werden beschrieben und ihre Funktion wird erklärt. Es zeigt:
- Figur 1 :: Ein Kochbehälter des Tischkochgerätes als runder Kopftopf ausgeführt, mit dem eingelegten Separierer und in jede Separierung eingelegter Gabel von oben gesehen;
- Figur 2 :: Den Kochtopf des Tischkochgerätes nach Figur 1 mit dem eingelegten Separierer und in jede Separierung eingelegter Gabel in einem flacheren Winkel gesehen;:
- Figur 3 :: Den Kochtopf des Tischkochgerätes nach Figur 1 mit bei eingelegten Gabeln aufgesetztem Kopftopfdeckel;
- Figur 4 :: Den Kochtopf des Tischkochgerätes mit einem an seinem Rand eingehängten Gargut-Behälter als Häppchenbehälter;
- Figur 5 :: Den befüllten Gargut-Behälter in geschlossenem Zustand;
- Figur 6 :: Den befüllten Gargut-Behälter beim Öffnen;
- Figur 7 :: Den Gargut-Behälter in einer Ansicht von der Seite;
- Figur 8 :: Den Gargut-Behälter in einer Ansicht von vorne;
- Figur 9 :: Den Gargut-Behälter in einer Ansicht von oben;
- Figur 10 :: Den Separierer gesondert dargestellt in perspektivischer Ansicht;
- Figur 11 :: Ein länglicher Kochbehälter des Kochgerätes mit Separierer und Gargut-Behälter, sowie zugehörigem Deckel;

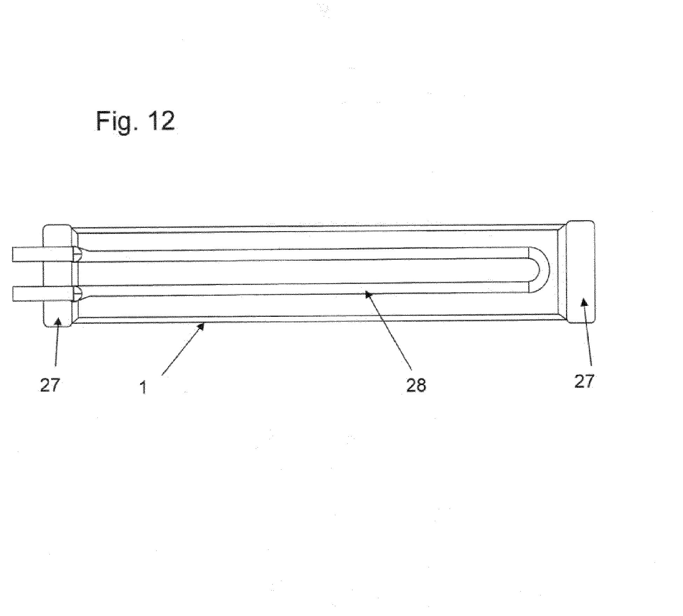

- Figur 12 :: Den länglichen Kochbehälter des Kochgerätes mit Heizschlange als Tauchsieder von oben gesehen.

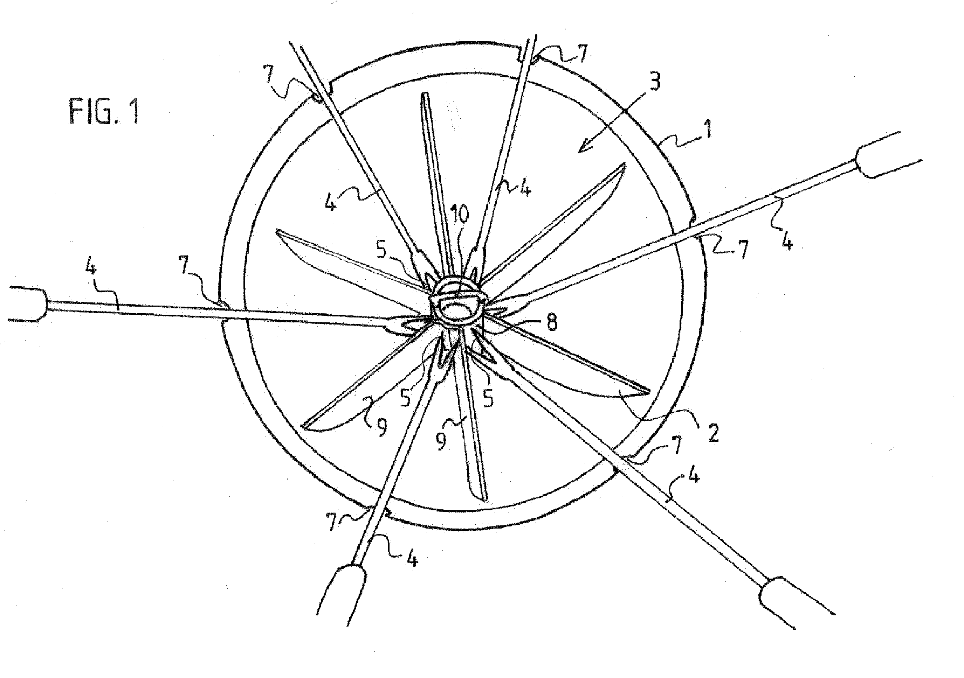

In Figur 1 ist ein Kochbehälter 1 des Tischkochgerätes mit dem eingelegten Separierer 2 gezeigt. Der Kochbehälter 1 ist hier ein runder Kochtopf. Der Separierer 2 unterteilt das Volumen des Kochtopfes in sechs Sektoren 3, die hier je die Form eines Tortenstückes aufweisen. Er ist hier aus einem zentralen Rohr 8 gefertigt, zum Beispiel aus Aluminium oder Chromstahl, und auf dessen Aussenseite drei je einstückige Flügelpaare 9 aus Chromstahl oder Aluminium durch Punktschweissungen angeschweisst sind. Die Form der Flügel 9 ist so gestaltet, dass ihr unterer und seitlicher Rand der Innenform des Kochtopfes nachgeführt ist, wobei ein geringfügiger Spalt zwischen dem Flügelende und der Kochtopf-Innenwand freibleibt, sodass ein Wasseraustausch zwischen den Sektoren 3 sichergestellt ist. Am oberen Ende des Rohres 8 ist ein Haltebügel 10 angeschweisst, an welchem der ganze Separierer 2 leicht aus dem Kochtopf 1 herausgehoben werden kann. Der Separierer 2 kann indessen auch aus Kunststoff hergestellt sein. In jedem der durch den Separierer 2 erzeugten Sektoren 3 ist hier eine Gabel 4 eingelegt, wobei die Gabelspitze 5 jeder Gabel 4 in die vorderen untere Eckes des Sektors 3 zu liegen kommt und dort auch zentriert ist. Die Gabel 4 gleitet steht so weit in den Kochtopf 1 hinein, bis die Gabelspitze 5 in dieser unteren vorderen Eckes des Sektors 3 einen Anschlag findet. Am oberen Kochtopfrand 6 sind hier für jeden Sektor 3 Aussparungen 7 vorhanden, in welche der Gabelstiel einlegbar ist. Damit ist jede Gabel 4 durch ihre Gabelspitze 5 und ihren Stiel in der hier gezeigten Lage festgehalten und kann im Kochtopf 1 nicht verrutschen. Weder kann sie tiefer in den Kochtopf 1 gleiten, noch kann sie seitlich auf dem Rand des Kochtopfes 1 wegrollen.

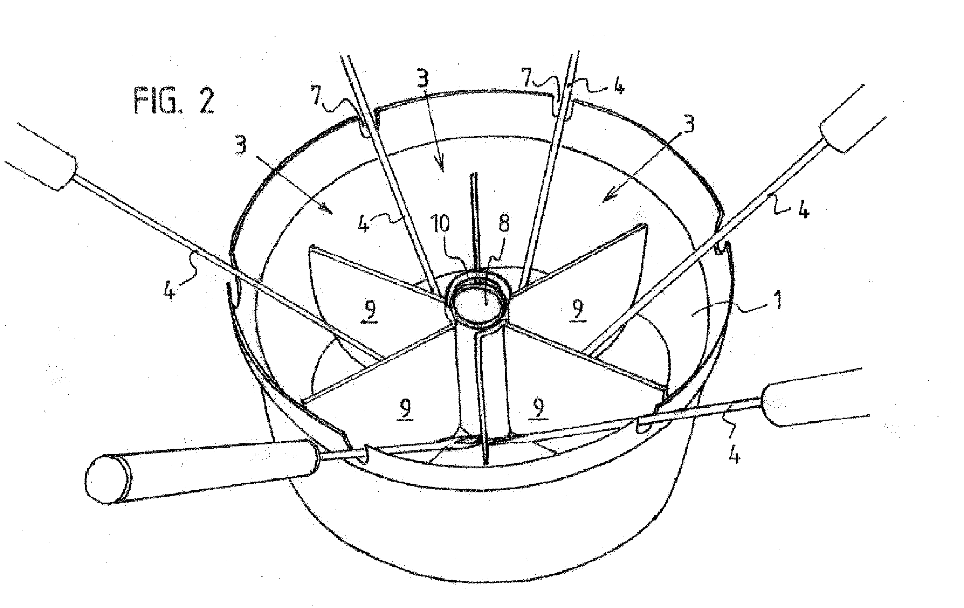

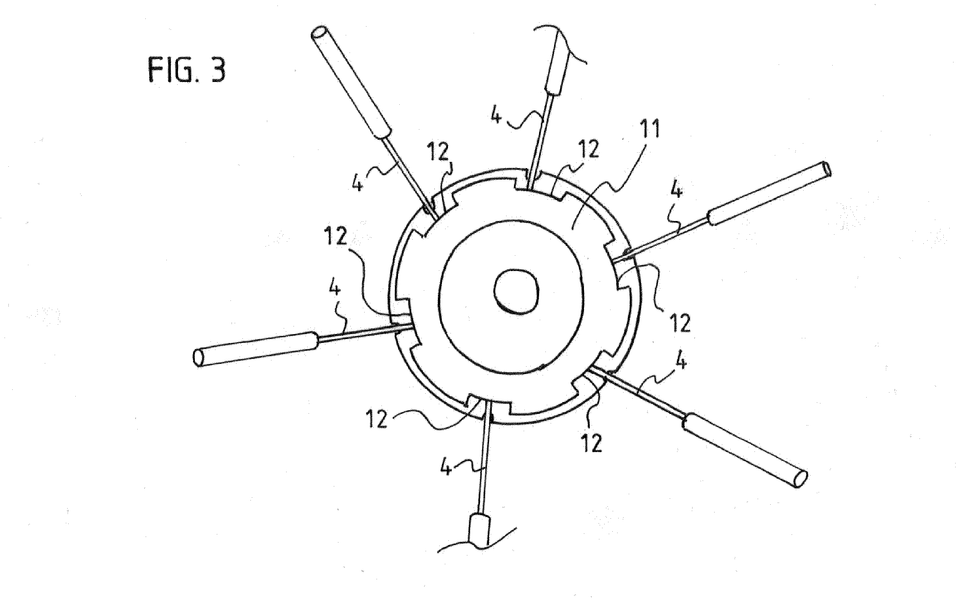

Die Figur 2 zeigt den Kochtopf 1 des Kochgerätes nach Figur 1 mit dem eingelegten Separierer 2 und die dadurch erzeugen Sektoren 3 mit je einer darin eingelegten Gabel 4 in einem flacheren Winkel gesehen. Dieser Kochtopf 1 wird auf einen herkömmlichen Pastenbrenner aufgesetzt, oder auf ein elektrisches Heizgerät aufgesetzt, oder auf ein mit Gas betriebenes Rechaud aufgesetzt. Und die Figur 3 zeigt den Kochtopf des Kochgerätes nach Figur 1 mit eingelegten Gabeln 4 und einem aufgesetzten, zugehörigen Deckel 11. Dieser Deckel 11 weist an seinem Aussenrand für jede Gabel 4 eine Ausnehmung 12 auf. Dadurch kann der Deckel 11 wie gezeigt auch bei eingelegten Gabeln 4 auf den Kochtopf 1 aufgesetzt werden. Das erweist sich bei einem Fondue-Chinoise als besonders wichtig. Gerade wenn ein Fondue Chinoise mit Pastenbrennern als Wärmequellen serviert wird, so besteht durchwegs das Problem, dass diese den gesamten Bouillon-Inhalt eines Kochtopfes 1 nicht hinreichend heiss zu halten vermögen. Die Temperatur der Bouillon sollte idealerweise ganz nahe am Siedepunkt liegen, also fast 100°C betragen. Weil das mit herkömmlichen Geräten, die mit Pastenbrennern betrieben werden, nicht erreicht wird, empfehlen die Anbieter, die Kochtöpfe nur etwa zur Hälfte mit Bouillon zu füllen. Das aber wiederum ist nachteilig, weil dann nur kleine Garstücke völlig in die Bouillon eingetaucht werden können, weil eben der Pegelstand der Bouillon zu niedrig ist. Aus demselben Grund werden viele solche Kochtöpfe für Fondue Chinoise mit oben nach innen auskragendem Rand hergestellt und angeboten. Diese Formgebung soll einen übermässigen Wärmeverlust nach oben hin verhindern. Der nach innen auskragende Rand weist dann V-förmige Einschnitte auf, in welchen die eingelegten Gabeln mit ihren Stielen zu liegen kommen. Wenngleich durch den nach innen auskragenden Kochtopfrand etwas weniger Wärme nach oben entweichen mag, so handelt man sich damit aber den Nachteil ein, dass die Gabeln 4 der verschiedenen Benützer sich im Kochtopf kreuzen und allzu gern alsbald eine Verwirrung entsteht, wem welche Gabel gehört. Oder die Gabeln mit den aufgesteckten Häppchen verheddern untereinander oder man verliert die aufgesteckten Häppchen in der Bouillon. Ausserdem wird durch den nach innen auskragenden Rand die Sicht in das Innere des Kochtopfes stark eingeschränkt.

Mit dem hier vorgestellten Kochgerät mit einem speziellen Deckel 11 für den Kochtopf 1 wird eine wesentliche Verbesserung erzielt. Der Kochtopf 1 kann bis knapp zum oberen Rand hin mit Bouillon gefüllt werden und diese wird dennoch hinreichend erhitzt, wenn man den Deckel 11 konsequent auf den Kochtopf 1 aufsetzt, wenn immer nicht gerade eine Gabel 4 eingelegt oder entnommen werden muss. In der Praxis hebt daher jeder Benützer am Tisch mit der einen Hand den Deckel 11 vom Kochtopf 1 ab, und mit der anderen Hand legt er seine Gabel 4 ein und legt den Deckel 1 hernach zwangsläufig sofort wieder auf den Kochtopf 1 auf. Für das Herausnehmen der Gabel 4 hebt er gleichermassen wieder zunächst den Deckel 11 ab und entnimmt dann seine Gabel, um den Deckel 11 gleich wieder aufzusetzen und damit einen unnötigen Wärmeverlust aus dem Kochtopf zu vermeiden und die Bouillon nahe am Siedepunkt zu halten.

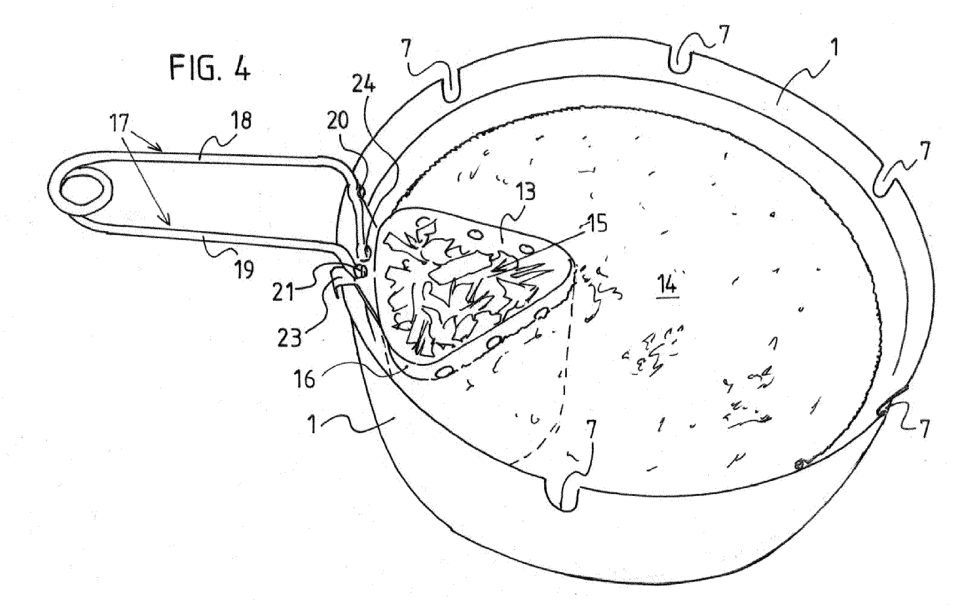

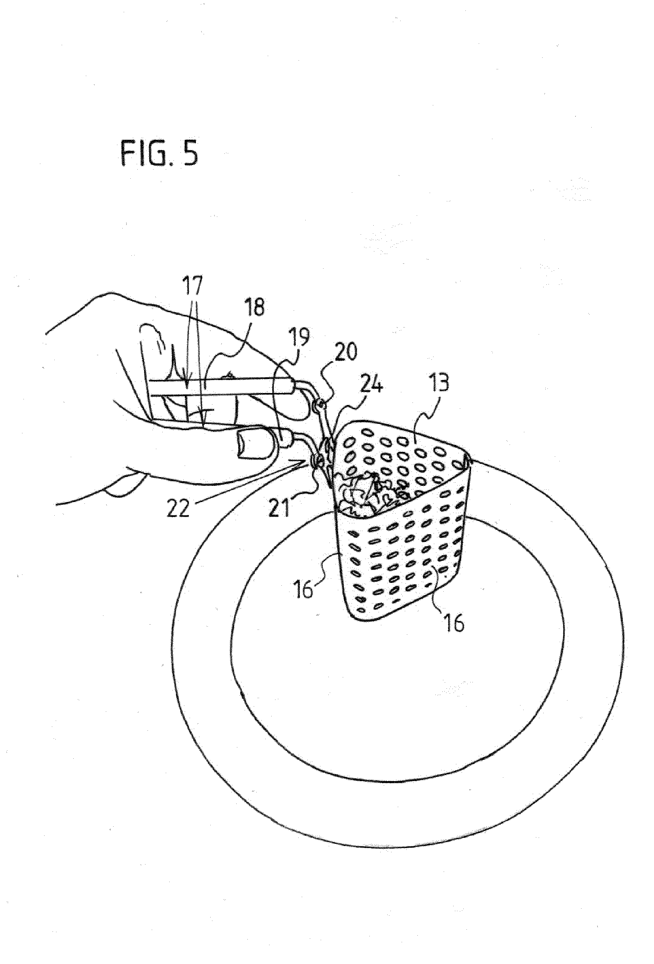

Die Figur 4 zeigt eine völlig neue Einsatzmöglichkeit des Tischkochgerätes für die Zubereitung bzw. für das Garkochen von Gemüse, Reis, Kartoffeln, Teigwaren und anderen Beilagen aller Art. Hierzu dient ein sehr spezieller Gargut-Behälter 13, welcher hier eingehängt am Kochtopfrand in die darin enthaltene Bouillon 14 eingetaucht ist. Der Gargut-Behälter 13 enthält hier ein Gemüse-Gemisch 15 zum Beispiel aus Lauch, Sellerie, Karotten und ähnlichen Zutaten. Der Gargut-Behälter 13 aus Aluminium oder Chromstahl weist perforierte Seitenwände 16 auf, und an seinem oberen Ende läuft er in einen Handgriff 17 aus. Die Figur 5 zeigt den Gargut-Behälter 13 gesondert dargestellt, von einem Benützer in der linken Hand gehalten. Der Gargut-Behälter 13 bildet einen von oben gesehen etwa dreieckförmigen Behälter 13 aus perforierten Seitenwänden 16. An der Rückwand des Gargut-Behälters 13 ist ein Haltegriff 17 befestigt, der aus zwei Stäben 18,19 besteht, die je über ein Gelenk 20,21 mit einem ScherMechanismus 22 an der Rückseite des Gargut-Behälters 13 verbunden sind. Ausserdem befindet sich an der Rückseite des Gargut-Behälters ein Haken 23, wie in Figur 4 gezeigt, mittels dessen der Gargut-Behälter 13 in das Innere eines Kochtopfes 1 hängbar ist, indem der Haken 23 nach aussen über den Kochtopfrand gehängt wird. Die beiden Stäbe 18,19 sind hinten sind Teil eines federnden Bügels. Der federnde Bügel bewirkt, dass die beiden Stäbe 18,19 aufgrund der Federkraft stets auseinandergespreizt werden. Das federbelastete Auseinanderspreizen der beiden Stäbe 18,19 bewirkt über den gelenkig mit ihren Enden verbundenen Schermechanismus 22, dass der Gargut-Behälter 13 in der gezeigten Lage geschlossen gehalten wird, denn er ist, wie das gleich klar wird, auseinander spreizbar.

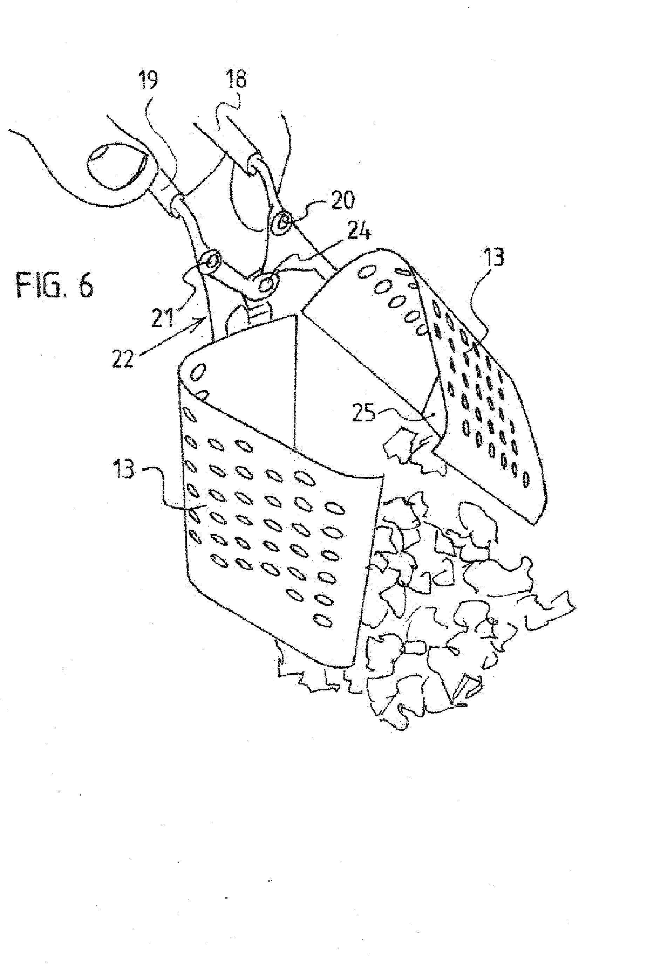

Die Figur 6 zeigt diesen Gargut-Behälter beim Öffnen. In dieser Darstellung ist einsehbar, wie der Gargut-Behälter in zwei Teile auseinanderschwenkbar ist. Der Schermechanismus 22 ist so gestaltet, dass ein zentrales Gelenk 24 sowie eines der Gelenke 21 am Ende eines Stabes 19 starr mit der Rückseite der einen Gargut-Behälterhälfte verbunden sind. Das andere Gelenk 20 des zweiten Stabes 18 ist hingegen starr mit der Rückseite der anderen Gargut-Behälterhälfte verbunden. Wird der Haltegriff, das heisst der von den beiden Stäben 18,19 gebildete Bügel zusammengepresst, so werden die beiden Gelenke 20,21 zueinander hin bewegt und der Schwermechanismus 22 bewirkt, dass die beiden Gargut-Behälterhälften um das zentrale Gelenk 24 auseinander geschwenkt oder auseinander gespreizt werden. Somit fällt das Gargut restlos nach unten aus dem Gargut-Behälter 13. Der Boden 25 des Gargut-Behälters wird von zwei schiefwinklig zu den Seitenwänden angeordneten Bodenhälften gebildet, sodass diese in aufgespreiztem Zustand des Gargut-Behälters annähernd vertikal zur Tischebene bzw. Tellerebene verlaufen und somit das Gargut nirgends hängenbleiben kann, sondern sicher und vollständig nach unten fällt.

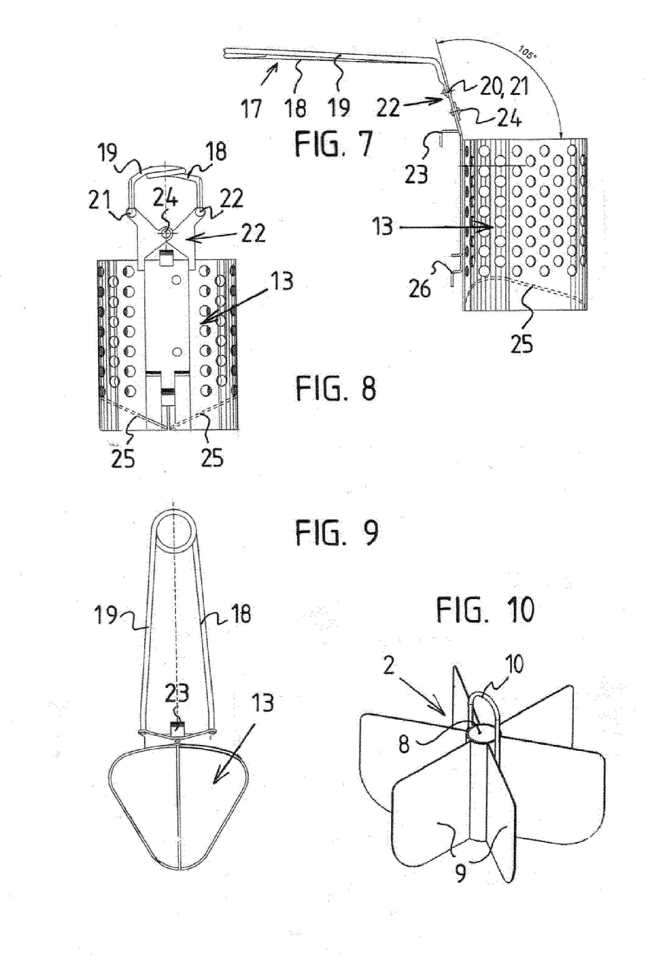

Die Figur 7 zeigt den Gargutbehälter 13 in einer Ansicht von der Seite. Man erkennt die perforierten Seitenwände, den Handgriff 17 und die beiden Gelenke 20,21 an den Enden der Stäbe 18,19, sowie das zentrale Gelenk 24 des Schermechanismus 22 und unterhalb desselben der Haken 23. Unten an der Rückseite des Gargut-Behälters 13 ist ein Abstandhalter 26 angeformt, sodass der Gargut-Behälter 13 nach dem Einhängen in einen Kochtopf 1 schön parallel zur Kochtopfinnenwand hängt. Dieser Gargut-Behälter misst ca. 75mm in der Höhe und seine Länge über alles einschliesslich des Handgriffes 17 beträgt ca. 165mm. Es versteht sich natürlich, dass andere Masse zum Einsatz kommen können.

Die Figur 8 zeigt diesen Gargut-Behälter 13 in einer Ansicht von vorne. Hier erkennt man den Schwenkmechanismus 22 mit seinem zentralen Gelenk 24 und den beiden Gelenken 20,21, die mit den beiden Stäben 18,19 des Handgriffs verbunden sind. Der Boden 25 des Gargut-Behälters ist ca. 25° gegenüber der Ebene geneigt. Wenn sich die beiden Gargut-Behälterhälften um je ca. 65° ausschwenken lassen, so verläuft der Boden dann mit einer Neigung von ca. 90° zur darunterliegenden Ebene. Schliesslich ist in Figur 9 noch eine Ansicht von oben gezeigt, aus welcher die Grundrissform hervorgeht. Die Seitenwände schliessen also vorne einen Winkel von etwa 60° ein, sodass sechs solche Gargut-Behälter 13 mit ihren Spitzen zueinander hin gerichtet zusammen einen Vollkreis von 360° schliessen. Als Alternative kann der Gargut-Behälter auch in einer einfacheren Version aus einem Drahtgitter hergestellt sein und ebenfalls einen Handgriff 17 aufweisen, sowie einen Haken zum Einhängen am Kopftopfrand. In diesen Fall bildet der Gargut-Behälter einfach einen oben offenen Korb, der in den Kochtopf hinein hängbar ist, ohne dass er aufspreizbar ist. Zum Entleeren wird er einfach um 90° bis 180° gekippt. In Figur 10 ist der zu Figur 1 schon beschriebene Separierer 2 zum Einlegen in den Kochtopf 1 noch gesondert in einer perspektivischen Ansicht dargestellt.

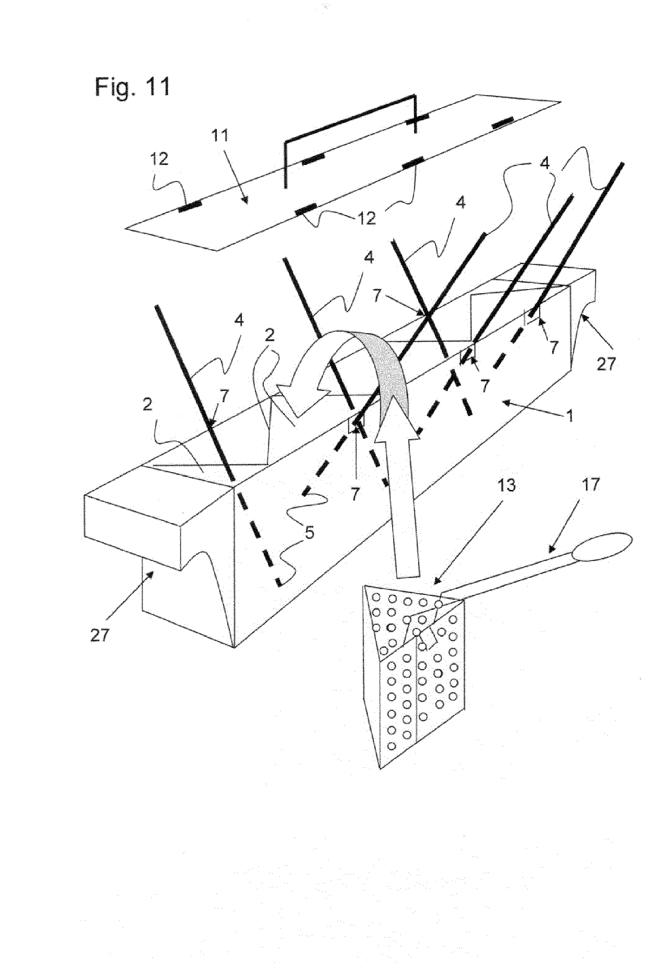

In Figur 11 ist eine besondere Ausführung des Tischkochgerätes mit einem länglichen Kochbehälter und einem zickzack-förmig verlaufenden Separierer 2 und einem einzuhängenden Gargut-Behälter 13 dargestellt, mit zugehörigem länglichen Deckel 11 für diesen Kochbehälter 1. An beiden Enden ist der Kochbehälter 1 mit einem Griff 27 ausgerüstet, welcher aus einem wärmeisolierenden Material besteht, zum Beispiel aus Holz, Stein oder Kunststoff. Dieser Kochbehälter 1 wird auf einen entsprechend länglichen gestalteten Pastenbrenner aufgesetzt, oder auf ein ebensolches elektrisches Heizgerät, oder auf ein mit Gas betriebenes Rechaud. Noch effizienter erweist es sich allerdings, wenn der Kochbehälter auf seiner Innenseite längs des Bodens mit einer Heizschlange 28 ausgerüstet ist, wie in Figur 11 gezeigt, die eine Ansicht des Kochbehälters von oben in sein Inneres zeigt. Diese Heizschlange 28 wirkt dann als Tauchsieder. Bei einem solchen quaderförmigen Behälter von ca. 50cm Länge und 5 Litern Inhalt genügt eine elektrische Leistungsaufnahme von 1300 Watt, um die in die Bouillon hineingehängten Happen garzukochen. Der Deckel 11 ist an seinen Längsrändern mit Ausnehmungen 12 versehen. Wenn die Gabeln 4 wie gezeigt an den Längsseiten in den Kochbehälter 1 eingelegt werden, so werden Gabelspitzen 5 in den durch den Separierer 2 gebildeten Ecken zentriert und die Gabelstiele finden in den Ausnehmungen 7 am oberen Rand des Kochbehälters einen Halt. Dieser längliche Kochbehälter wird, wenn nicht mit einer Heizschlange ausgerüstet, auf einen länglichen Halter für Pastenbrenner aufgesetzt und für jedes Einlegen und Entnehmen wir der Deckel 11 kurz angehoben und gleich wieder aufgesetzt, damit nur wenig Wärme nach oben entweicht und die Pastenbrenner die Bouillon auf Gartemperatur zu halten vermögen.

## Patentansprüche

1. Tisch-Kochgerät zum Garkochen von Fleisch- und Fischhäppchen sowie allerlei Gemüse und Teigwaren in einer Bouillon oder in Öl, mit einem Kochbehälter (1) zum Aufsetzen auf einen Heizkörper oder Pastenbrenner, oder ausgerüstet mit einer als Tauchsieder ausgeführten Heizschlange, und zugehörigen Gabeln (4) zum Anstecken von Esshäppchen, **dadurch gekennzeichnet, dass** es individuelle wasserdurchlässige Gargut-Behälter (13) mit Handgriff (17) einschliesst, die am Kochtopfrand des Kochtopfes (1) unter Eintauchens des Gargut-Behälters (13) in die Bouillon oder ins Öl im Kochtopf (1) einhängbar sind.

2. Tisch-Kochgerät nach Anspruch 1, **dadurch gekennzeichnet, dass** die Gargut-Behälter (13) durch Zusammendrücken des Handgriffs (17) in mindestens zwei Teile aufspreizbar sind, sodass ihr Inhalt unten herausfallen kann.

3. Tisch-Kochgerät nach Anspruch 1, **dadurch gekennzeichnet, dass**, der Kochbehälter (1) mit einem Separierer (2) aus senkrechten auf dem Kochbehälterboden stehenden Trennwänden besteht, welcher dreieckige Sektoren (3) zur Aufnahme der Spitze (5) je einer individuellen Gabel (4) bildet.

4. Tisch-Kochgerät nach einem der vorangehenden Ansprüche, **dadurch gekennzeichnet, dass** der Kochbehälter einen Kochbehälterdeckel (11) aufweist, der für jede individuell in den Kochbehälter (1) einzulegende Gabel (4) eine Aussparung (12) am Rand aufweist, sodass der Kochbehälterdeckel (11) auch bei eingelegten Gabeln (4) aufsetzbar ist.

5. Tisch-Kochgerät nach einem der vorangehenden Ansprüche, **dadurch gekennzeichnet, dass** die individuellen wasserdurchlässigen Gargut-Behälter (13) mit Handgriff (17) aus je einem zweiteiligen Behälter aus perforierten Seiten (16) besteht, wobei die beiden Behälterteile als Behälterhälften ausgeführt sind und über einen Schermechanismus (22) an ihrer Rückseite um eine zentrales Gelenk (24) daran voneinander wegsschwenkbar sind, indem der Schermechanismus zwei oberhalb des zentralen Gelenkes (24) zueinander um die Achse des zentralen Gelenkes (24) herum verschwenkbare Gelenke (20,21) aufweist, an denen die vorderen Enden der Stäbe (18,19) befestigt sind, die hinten zu einem federnden Bügel verbunden sind, der gegen Federkraft zusammendrückbar ist.

6. Tisch-Kochgerät nach Anspruch 5, **dadurch gekennzeichnet, dass** der Boden (25) des Gargut-Behälters (13) in jedem seiner beiden Teile aus einem schiefwinklig zu den Seitenwänden (16) angeordneten Bodenstück besteht, sodass diese Bodenstücke bei Aufspreizung der beiden Behälterteile annähernd parallel zueinander verlaufen.

7. Tisch-Kochgerät nach einem der vorangehenden Ansprüche, **dadurch gekennzeichnet, dass** der Gargut-Behälter (13) aus Chromstahl gefertigt ist und perforierte Seitenwände aufweist.

8. Tisch-Kochgerät nach einem der Ansprüche 1 bis 6, **dadurch gekennzeichnet, dass** der Gargut-Behälter (13) aus Aluminium gefertigt ist und perforierte Seitenwände aufweist.

9. Tisch-Kochgerät nach einem der Ansprüche 1 bis 6, **dadurch gekennzeichnet, dass** der Gargut-Behälter (13) aus einem Stahlgitter gefertigt ist und ein Körbchen mit Handgriff bildet.

10. Tisch-Kochgerät nach einem der Ansprüche 1 bis 6, **dadurch gekennzeichnet, dass** der Gargut-Behälter (13) aus Kunststoff gefertigt ist und perforierte Seitenwände aufweist.

11. Tisch-Kochgerät nach einem der Ansprüche 3 bis 9, **dadurch gekennzeichnet, dass** der Separierer (2) aus einem zentralen Rohr (8) besteht, an dessen Aussenseite drei Flügelpaare (9) angeschweisst sind, zur Bildung von sechs gleichgrossen Sektoren (3), wobei die Flügelränder dieser Flügel der Kontur des Bodens und der Seitenwand des Kochbehälters (1) nachgeführt sind, in welchen der Separierer (2) einzusetzen bestimmt ist, und dass oben auf dem Rohr (8) ein Haltebügel (10) angebracht ist.

12. Tisch-Kochgerät nach einem der Ansprüche 3 bis 9, **dadurch gekennzeichnet, dass** der Separierer (2) aus einem zickzack-förmigen Blech besteht, das in einen länglichen Kochbehälter einsetzbar ist, sodass beidseits im Grundriss gleichseitige Dreiecke als Sektoren zur Aufnahme der Gabeln (4) gebildet sind.

13. Tisch-Kochgerät nach einem der Ansprüche 3 bis 9, **dadurch gekennzeichnet, dass** der Kochbehälter, sei er länglich oder rund, läng seines oberen Randes Ausnehmungen (7) aufweist, zur Aufnahme der Stiele der in den Kochbehälter (1) eingelegten Gabeln (4).

14. Tisch-Kochgerät nach einem der vorangehenden Ansprüche, **dadurch gekennzeichnet, dass** der zugehörige Deckel (11) für den Kochbehälter längs seines Randes Ausnehmungen (12) aufweist, zur Aufnahme der Stiele der in den Kochtopf (1) eingelegten Gabeln (4) bei aufgesetztem Deckel (11).
